Europäisches Patentamt

European Patent Office

Office européen des brevets

(11) Veröffentlichungsnummer: **0 175 099**
**B1**

# EUROPÄISCHE PATENTSCHRIFT

(45) Veröffentlichungstag der Patentschrift:
14.06.89

(51) Int. Cl.⁴: **H 02 J 9/06, G 11 C 5/00**

(21) Anmeldenummer: 85109387.2

(22) Anmeldetag: 26.07.85

(54) Einrichtung zur unterbrechungsfreien Spannungsumschaltung.

(30) Priorität: 10.08.84 DE 3429572

(43) Veröffentlichungstag der Anmeldung:
26.03.86 Patentblatt 86/13

(45) Bekanntmachung des Hinweises auf die Patenterteilung:
14.06.89 Patentblatt 89/24

(84) Benannte Vertragsstaaten:
CH DE FR IT LI SE

(56) Entgegenhaltungen:
EP-A- 0 051 533
DE-B- 2 929 515
US-A- 4 342 922

ELECTRICAL DESIGN NEWS, Band 23, Nr. 17,
September 1978, Seite 150, Denver, US; S.L. LILLEVIK:
"Battery backup keeps CMOS RAM's alive"
MESSEN + PRÜFEN/AUTOMATIK, Nr. 11, November
1979, Seiten 861-865,887-890,895,896,899-902,905,906,
Bad Wörishofen, DE; L. MISKIN u.a.:
"VMOS-Transistoren - Eigenschaften und
Schaltungsbeispiele"

(73) Patentinhaber: Siemens Aktiengesellschaft Berlin und
München, Wittelsbacherplatz 2, D-8000 München 2 (DE)

(72) Erfinder: Schick, Ludwig, Gartenstrasse 17,
D-8521 Grossenseebach (DE)
Erfinder: Winterstein, Thomas, Dipl.-Ing. (FH), Am
Europakanal 4, D-8520 Erlangen (DE)

## Beschreibung

Die Erfindung bezieht sich auf eine Einrichtung zur unterbrechungsfreien Spannungsumschaltung, wobei ein Verbraucher jeweils über eine in Durchlassrichtung gepolte Diodenstrecke mit einer Netzversorgungsspannungsquelle und mit einer Batteriespannungsquelle verbunden ist, wobei die Spannung der Netzversorgungsspannung im regulären ungepufferten Betrieb höher ist als die Spannung der Batteriespannungsquelle, und wobei eine an die Spannungsquellen geschaltete Vergleichseinrichtung vorgesehen ist, mit deren Hilfe jeweils die Spannungsquelle mit der höheren Spannung den Verbraucher speist.

Derartige Spannungsumschalter werden beispielsweise benötigt, wenn die Versorgungsspannung von C-MOS-Speichern von Netz- auf Batteriebetrieb oder umgekehrt geschaltet werden muss. Die Umschaltung kann mit Relais-Schaltungen erfolgen, wobei derartige Relais-Schaltungen jedoch eine gewisse Schaltträgheit besitzen und die Umschaltung nicht ohne weiteres unterbrechungsfrei erfolgt. Es ist aber auch möglich, dass als Umschalter Dioden verwendet werden, deren Kathoden bzw. Anoden miteinander und mit einer Ausgangsklemme verbunden sind, während die Spannungsquellen jeweils mit der Anode bzw. Kathode jeweils einer der Dioden kontaktiert sind. Wegen des Diodenschwellwertes für Silicium-Leistungsdioden von ca. 0,7 V tritt bei diesen Umschalteinrichtungen jedoch ein Spannungsabfall auf, der insbesondere bei der Stromversorgung von C-MOS-Speichern grösser als der zulässige Wert ist.

Aus der US-A 4 342 922 ist eine Einrichtung zur unterbrechungsfreien Spannungsumschaltung mit zwei über Dioden mit einem Verbraucher verbundenen Spannungsquellen bekannt. Als Spannungsquellen sind eine geregelte Spannungsquelle und eine Batteriespannungsquelle vorgesehen. Ein Feldeffekt-Transistor ist der der Batteriespannungsquelle nachgeschalteten Diode elektrisch nachgeschaltet. Ausserdem ist eine an die Spannungsquellen geschaltete Vergleichseinrichtung vorgesehen, durch die der Feldeffekt-Transistor gegen seine zugeordnete Spannungsquelle sperrbar ist. Dabei dient die Vergleichseinrichtung als Wechselstrom-Fehlererkennung, wobei im Fehlerfall die Batteriespannungsquelle auf den Verbraucher geschaltet wird. Auch bei dieser Umschalteinrichtung tritt wegen des Diodenschwellwertes ein für C-MOS-Speicher zu hoher Spannungsabfall auf.

Aus der Zeitschrift «Electrical Design News, Band 23, Nr. 17, September 1978, Seite 150» ist eine Schaltung zur unterbrechungsfreien Spannungsversorgung bekannt. Bei dieser Schaltungsanordnung wird ein Verbraucher einerseits über eine Diode aus einer Spannungsquelle und andererseits über einen P-Kanal-Feldeffekt-Transistor aus einer Batterie versorgt. Eine Vergleichseinrichtung vergleicht die Spannung der Spannungsquelle mit der Spannung der Batterie, wodurch der Feldeffekt-Transistor niederohmig geschaltet wird, sobald die Spannung der Spannungsquelle unter einen vorbestimmten Wert sinkt. Auch bei dieser Schaltungsanordnungen wird die Spannung der Spannungsquelle im ungepufferten Betrieb durch die Diode zu sehr verringert.

Aus der DE-AS 2 929 515 ist zur Reduzierung des Spannungsabfalls die Verwendung von bipolaren Schalttransistoren zur Umschaltung bekannt. Dabei dienen diese bipolaren Schalttransistoren als steuerbare Diodenstrecken, die jeweils zwischen einer Ausgangs- und einer Eingangsklemme geschaltet sind. Eine Vergleichseinrichtung, bestehend aus zwei Dioden, zwei Ansteuertransistoren und einem gemeinsamen Emitterwiderstand, schaltet jeweils einen der beiden Schalttransistoren leitend, damit die Spannungsquelle mit der höheren Spannung den Verbraucher an der Ausgangsklemme speist. Derartige Transistoren sind jedoch nur für relativ kleine zu schaltende Ströme einsetzbar. In neuerer Zeit sind jedoch Leistungs-Feldeffekttransistoren handelsüblich, die als Ersatz für Leistungstransistoren verwendet werden können, wobei derartige Leistungs-Feldeffekttransistoren bei geringer Ansteuerleistung ein grosses Leistungsschaltvermögen bei kleinem Spannungsabfall gegenüber bipolaren Transistoren aufweisen. Der apparative Aufwand beim Einsatz von Leistungs-Feldeffekttransistoren ist dabei relativ gering. Da allerdings derartige Leistungs-Feldeffekttransistoren zwischen ihre Source-Anschluss und ihrem Drain-Anschluss eine Reverse-Diode aufweisen, würde bei einem blossen Austausch der Transistoren in einer Schaltung gemäss der vorgenannten DE-AS durch Leistungs-Feldeffekttransistoren eine unzulässige Rückwirkung der jeweils speisenden Spannungsquelle auf die jeweils nicht speisende Spannungsquelle erfolgen.

Aufgabe der Erfindung ist es, eine Schaltungsanordnung der eingangs genannten Art so auszubilden, dass in äusserst einfacher Weise ein Umschalten mit geringem Spannungsabfall unterbrechungsfrei erfolgt.

Gemäss der Erfindung wird diese Aufgabe dadurch gelöst, dass die Diodenstrecke zur Netzversorgungsspannungsquelle durch eine Reverse-Diode eines Leistungs-Feldeffekttransistors und die Diodenstrecke zur Batteriespannungsquelle durch eine Diode gebildet sind und dass durch die Vergleichseinrichtung für den Leistungs-Feldeffekttransistor Gate-Steuerspannungen steuerbar sind, die einer gesonderten Hilfsspannungsquelle entnehmbar sind, wodurch der Leistungs-Feldeffekttransistor gegen seine zugeordnete Spannungsquelle sperrbar ist. Dabei ist die Erkenntnis ausgenutzt worden, dass ein Leistungs-Feldeffekttransistor auch invers betrieben werden kann. Der Leistungs-Feldeffekttransistor wird in diesem Fall nicht in üblicher Weise als steuerbarer Widerstand mit gegensinnig parallelgeschalteter Diode benutzt, sondern der Leistungs-Feldeffekttransistor wird als steuerbarer äusserst niederohmiger Nebenschluss für die Reverse-Diode betrieben.

Die der Pufferbatterie zugeordnete Diodenstrecke ist als Diode ausgebildet, da davon ausgegangen werden kann, dass während des Pufferbatteriebetriebs ein grösserer Spannungsabfall für die unterbrechende Anordnung toleriert werden kann als für die übrige Betriebszeit.

Dadurch, dass durch die Vergleichseinrichtung für den jeweiligen Leistungs-Feldeffekttransistor Gate-Steuersignale steuerbar sind, die einer gesonderten Hilfsspannungsquelle entnehmbar sind, wird der schaltungstechnische Aufwand äusserst gering gehalten.

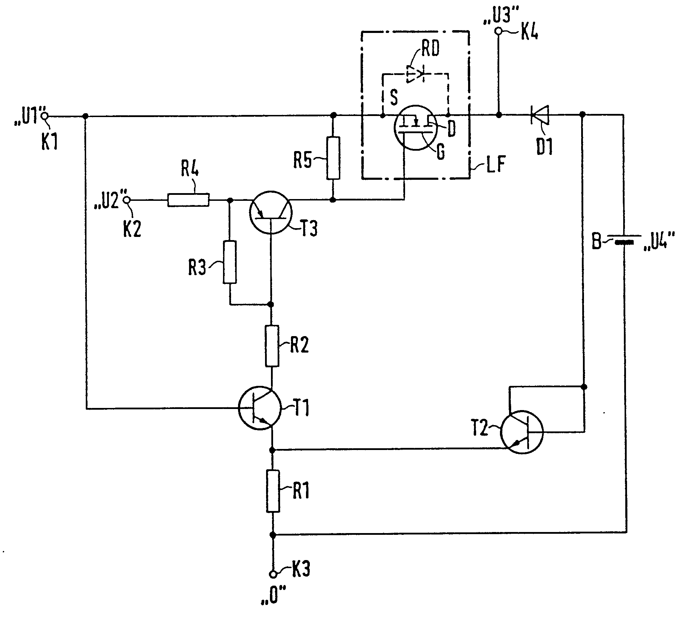

Ein Ausführungsbeispiel der Erfindung ist in der Zeichnung dargestellt und wird im folgenden näher erläutert.

Die Darstellung zeigt eine Einrichtung zur unterbrechungsfreien Spannungsumschaltung, bei der zwei Spannungsquellen vorgesehen sind, von denen die eine der Übersichtlichkeit halber nicht dargestellte Spannungsquelle an Klemmen K1 und K3 geschaltet ist, wobei der Klemme K1 eine positive Spannung «U1» und der Klemme K3 eine Bezugsspannung «0» eingeprägt wird. Als zweite Spannungsquelle ist eine Batterie B vorgesehen, die mit ihrem negativen Pol mit der Klemme K3 verbunden ist und deren positiver Pol an die Anode einer Diode D1 führt. Die Batterie B liefert eine Spannung «U4». Die Kathode der Diode D1 führt an eine Klemme K4. Die Klemme K1 ist über einen LeistungsFeldeffekttransistor LF mit der Klemme K4 verbunden. Dabei ist der Leistungs-Feldeffekttransistor LF so geschaltet, dass seine Reverse-Diode RD mit ihrer Kathode mit der Kathode der Diode D1 verbunden ist, während die Anode der Reverse-Diode RD mit der Klemme K1 verbunden ist. Das bedeutet, dass der Source-Anschluss S des LeistungsFeldeffekttransistors LF mit der Klemme K1 kontaktiert ist und der Drain-Anschluss D des Leistungs-Feldeffekttransistors mit der Klemme K4 verbunden ist. Zum Steuern des Widerstandes zwischen dem Anschluss S und dem Anschluss D des Leistungs-Feldeffekttransistors ist ein Gate G vorgesehen, dessen Ansteuerung im folgenden noch erläutert wird.

Die Anode der Diode D1 führt an Basis und Kollektor eines npn-Transistors T2, dessen Emitter über einen Widerstand R1 mit der Klemme K3 verbunden ist. Die Klemme K1 führt an die Basis eines npn-Transistors T1, dessen Emitter mit dem Emitter des Transistors T2 verbunden ist. Die Anordnung aus Transistor T1, Transistor T2 und Widerstand R1 stellt eine Vergleichseinrichtung dar, mit deren Hilfe die Spannung «U1» und die Spannung «U4» verglichen werden. Der Transistor T2 ist dabei als Diode geschaltet, die eine gleiche Durchlasscharakteristik wie die BasisEmitter-Diode des Transistors T1 aufweist.

Sobald die Spannung «U1» grösser als die Spannung «U4» ist, wird der Transistor T1 durchlässig geschaltet. Dieser Betriebsfall liegt bei regulärem ungepuffertem Betrieb vor. Bei einem derartigen Betrieb sind beispielsweise an die Klemme K4 angeschlossene, der Übersichtlichkeit halber nicht dargestellte Speichermittel in der Lage, einen Schreib-Lese-Betrieb sicher zu gewährleisten.

Wenn der Transistor T1 niederohmig ist, fliesst über eine Klemme K2, die mit einer gegenüber der Spannung «U1» höheren positiven Spannung «U2» beaufschlagt ist, ein Strom über die seriell geschalteten Widerstände R4, R3 und R2 sowie über den Widerstand R1 zur Klemme K3. Der Spannungsabfall am Widerstand R3 steuert dabei einen pnp-Transistor T3 an, dessen Basis mit dem Verbindungspunkt des Widerstandes R2 und des Widerstandes R3 und dessen Emitter mit dem Verbindungspunkt des Widerstandes R3 und des Widerstandes R4 verbunden ist. Der durchgeschaltete Transistor T3 lässt von der Klemme K2 über die Widerstände R4 und einen zwischen Kollektor des Transistors T3 und Klemme K1 angeordneten Widerstand R5 einen Strom fliessen, der einen Spannungsabfall am Widerstand R5 verursacht, der wiederum dazu dient, die Drain-Source-Strecke des Leistungs Feldeffekttransistors LF niederohmig zu schalten. Damit herrscht zwischen den Anschlüssen S und D des Leistungs-Feldeffekttransistors LF ein entsprechend den eingangs geschilderten Bedingungen ausreichend geringer ohmscher Widerstand, der auch bei grossen Strömen, wie diese beim Schreib-Lese-Betrieb eines Speichers auftreten, zu einem vernachlässigbaren Spannungsabfall zwischen den Anschlüssen S und D führt.

Sofern die Spannung «U4» grösser als die Spannung «U1» ist, was beispielsweise beim Ausschalten der die Spannung «U1» abgebenden Spannungsquelle erfolgt, wird die Spannung «U4» über die Diode D1 an die Klemme K4 geleitet und verursacht eine Spannung «U3», die der Spannung «U4» vermindert um die Flussspannung der Diode entspricht.

Eine demzufolge bestehende Reduzierung der Spannung «U3» ist möglich, wenn die nachgeschalteten Verbraucher im Pufferbetrieb diese verminderte Spannung tolerieren.

**Patentanspruch**

Einrichtung zur unterbrechungsfreien Spannungsumschaltung, wobei ein Verbraucher jeweils über eine in Durchlassrichtung gepolte Diodenstrecke (RD, D1) mit einer Netzversorgungsspannungsquelle und mit einer Batteriespannungsquelle (B) verbunden ist, wobei die Spannung (U1) der Netzversorgungsspannung im regulären ungepufferten Betrieb höher ist als die Spannung (U4) der Batteriespannungsquelle (B), und wobei eine an die Spannungsquellen geschaltete Vergleichseinrichtung (T1, T2, R1) vorgesehen ist, mit deren Hilfe jeweils die Spannungsquelle mit der höheren Spannung (U1 bzw. U4) den Verbraucher speist, dadurch gekennzeichnet, dass die Diodenstrecke zur Netzversorgungsspannungsquelle durch eine Reverse-Diode (RD) eines Leistungs-Feldeffekttransistors (LF) und die Diodenstrecke zur Batteriespannungsquelle (B) durch eine Diode (D1) gebildet sind und dass durch die Vergleichseinrichtung (T1, T2, R1) für den Leistungs-Feld-Effekttransistor (LF) Gate-Steuerspannungen steuerbar sind, die einer gesonderten Hilfsspannungsquelle entnehmbar sind, wodurch der Leistungs-Feldeffekttransistor (LF) gegen seine zugeordnete Spannungsquelle sperrbar ist.

## Claim

Arrangement for uninterrupted voltage switchover, in which a load is connected by way of respective diode paths (RD, D1), conductive in the forward direction, to a mains supply voltage source and to a battery voltage source (B), the voltage (U1) of the mains supply voltage being higher, in regular unbuffered operation, than the voltage (U4) of the battery voltage source (B) and there being provided a comparison arrangement (T1, T2, R1) which is connected to the voltage sources and with the aid of which, at any one time, the voltage source with the higher voltage (U1 or U4) feeds the load, characterised in that the diode path to the mains supply voltage source is formed by a reverse diode (RD) of a power field-effect transistor (LF) and the diode path to the battery voltage source (B) is formed by a diode (D1) and in that gate control voltages can be controlled by the comparison arrangement (T1, T2, R1) for the power field-effect transistor (LF), which gate control voltages can be derived from a separate auxiliary voltage source, whereby the power field-effect transistor (LF) can be disabled with respect to its associated voltage source.

## Revendication

Dispositif pour la commutation de tension sans interruption, par lequel un consommateur est relié, soit à travers un circuit à diode (RD) polarisé dans le sens passant à une source de tension constituée par une alimentation par le réseau ou source de tension-réseau, soit à travers un circuit à diode (D1) polarisé dans le sens passant à une source de tension constituée par une batterie ou une pile (B), la tension constituée par une batterie ou une pile (B), la tension (U1) de la source de la tension-réseau étant plus élevée, lors du fonctionnement normal non tamponné, que la tension (U4) de la source de tension-batterie (B), et dans lequel est prévu un dispositif de comparaison (T1, T2, R1) connecté aux sources de tension et à l'aide duquel la source ayant la tension la plus élevée (U1 ou U4) alimente chaque fois le consommateur, caractérisé en ce que le circuit à diode menant à la source de tension-réseau est formé par une diode inverse (RD) d'un transistor à effet de champ de puissance (LF) et le circuit à diode menant à la source de tension-batterie (B) est formé par une diode (D1) et que le dispositif de comparaison (T1, T2, R1) est capable de commander, pour le transistor à effet de champ de puissance (LF), des tensions de commande de grille qui peuvent être prélevées d'une source de tension auxiliaire séparée, ce qui permet de bloquer le transistor à effet de champ de puissance (LF) vis-à-vis de la source de tension qui lui est coordonnée.

EP 0 175 099 B1

5